# EUROPEAN PATENT SPECIFICATION

(11) **EP 1 655 756 B1**
(45) Date of publication and mention of the grant of the patent: **20.04.2011**
(21) Application number: 04748015.7
(22) Date of filing: 22.07.2004
(51) Int. Cl.: H01J 9/385, H01J 9/40

(54) **GLASS CHIP TUBE SEAL-CUTTING METHOD**
DICHTUNGS-SCHNEIDVERFAHREN FÜR GLÄSERNE PUMPRÖHRCHEN
PROCEDE DE COUPE-SOUDURE DE TUBES A LAME DE VERRE

(30) Priority: 11.08.2003 JP 2003291455
(43) Date of publication of application: 10.05.2006
(73) Proprietor: Chugai Ro Co., Ltd., Osaka 541-0046 (JP)
(72) Inventor: KISODA, Kinya,, Osaka-shi, Osaka 541-0046 (JP)
(74) Representative: Glawe, Delfs, Moll
(86) International application number: PCT/JP2004/010750
(87) International publication number: WO 2005/015597

(56) References cited:
- JP-A- 2002 033 051
- JP-A- 2002 358 899
- JP-A- 2003 145 467
- JP-A- 2003 176 146
- JP-A- 2003 183 038

## Description

### Technical Field

The present invention relates to a sealingly cutting method of a glass chip tube in which a glass chip tube sealingly bonded and fixed to a glass panel is heated and sealingly cut.

### Background Art

For example, in the case of manufacturing a flat display panel, a glass chip tube is sealingly bonded and fixed to a panel through a frit seal, and the panel is subjected to a vacuum evacuation process through this glass chip tube, and after electric discharge gas has been sealed in the panel, the glass chip tube is sealingly cut.

Conventionally, with respect to the sealingly cutting process for a glass narrow tube such as a glass chip tube, a gas burner which heats and fuses the tube has been used (for example, see Japanese Patent Laid-Open Publication No. 2002-63845 and Japanese Patent Laid-Open Publication No. 2001-216898).

When a glass chip tube is sufficiently long, when the panel is placed perpendicularly, or when a glass chip tube is placed on the upper side of a panel which is horizontally placed, the panel and the frit seal are less susceptible to adverse effects of high temperatures, and the glass chip tube can be heated and fused by a gas burner so as to be sealingly cut. However, along with the developments of thinner panels and automatic sealingly cutting processes, there have been strong demands for shortened glass chip tubes and for arrangements in which a panel is maintained horizontally, and the glass chip tube is placed on the lower side of the panel. However, if the glass chip tube is short, when the glass chip tube is sealingly cut by using the gas burner, problems, such as panel damages, leaks occurring at frit seal portions, degradation in panel quality and deviations in panel characteristics, etc., arise due to thermal shock caused by gas-burner flames directly touching the panel and radiant heat from the flames. Furthermore, if the panel is horizontally placed with the glass chip tube being placed on the lower side, the above-mentioned problems arise due to influence of convective heat in addition to the above causes.

In order to solve the above-mentioned problems, a method in which a heat insulation plate which shields only the vicinity of the gas burner is placed between the gas burner and the panel and a method in which cooling air is sprayed onto a sealingly-bonded and fixed portion between the panel and the glass chip tube have been adopted. Examples of these methods are described in JP 2002 033 051 and JP 2003 176 146, respectively.

However, in the former method in which the heat insulation plate is placed, in particular, when the panel is maintained horizontally with the glass chip tube being placed in the perpendicularly downward direction, the panel is more susceptible to adverse effects due to convective heat to the panel, failing to solve the above-mentioned problems. Moreover, in the latter method in which cooling air is used, a portion of the cooling air tends to enter a heated section by the gas burner to cause instability in glass chip heating conditions, resulting in a failure in the sealingly cutting process and deviations in panel characteristics.

Meanwhile, the above-mentioned problems are not limited to the case in which a gas burner is used as the panel heating means, but tend to occur in the other heating means.

The present invention has been developed to solve the above-mentioned problems, and its objective is to provide a sealingly cutting method of a glass chip tube which is free from panel damages, leaks from frit seal portions and deviations in panel characteristics, even when the length of the glass chip tube is shortened.

### DISCLOSURE OF THE INVENTION

In order to solve the above-mentioned problems, the first aspect of the present invention relates to a sealingly cutting method of a glass chip tube sealingly fixed to a glass panel, and held by an exhaust head for sucking gas in the glass panel through the glass chip tube, comprising a step of fusing a base portion of the glass chip tube adjacent to the glass panel by a heating means comprising a gas burner so that the base portion is cut off while at least an opening of the glass panel side is being closed, wherein the glass panel is maintained horizontally with the glass chip tube being placed in the perpendicularly downward direction, wherein a heat insulation plate is provided between the base portion and the glass panel parallel to the glass panel so as to form an air layer isolated from the base portion and cooling air is delivered to the air layer.

Effects provided by the first aspect is that even in the case when the glass chip tube is shortened, in particular, even in the case when a panel is placed horizontally with the glass chip tube being placed on the lower side thereof, it is possible to carry out a sealingly cutting process of the glass chip tube without causing panel damages, leaks from frit seal portions and deviations in panel characteristics.

In addition to the arrangement of the first aspect, the second aspect of the present invention has an arrangement in which a base portion of the glass chip tube adjacent to the glass panel is fused by a heating means so that the base portion is cut off while the exhaust head is being removed from the glass panel.

Effects provided by the second aspect is that, in addition to the effects of the first aspect, the sealingly cutting portion of the glass chip tube is desirably formed into a straight narrowed shape toward the tip without causing an undesired shape, such as a bent shape and a largely expanded spherical shape, that results in problems in handling in the succeeding panel processing step.

### BRIEF DESCRIPTION OF THE DRAWINGS

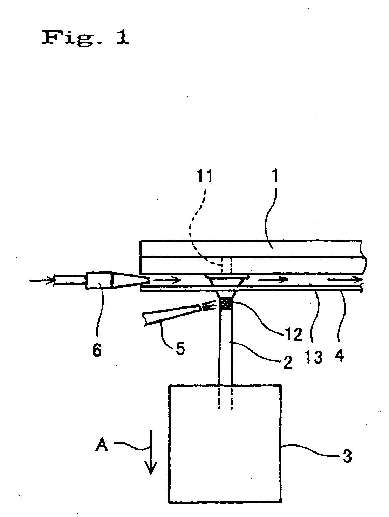

Fig. 1 illustrates a state of sealingly cutting operation of a glass chip tube to which a method in accordance with the present invention is applied.

### DETAILED DESCRIPTION OF THE PREFERRED EMBODIMENTS

Hereinafter, embodiments of the present invention are described with reference to the drawing.

Fig. 1 illustrates a state to which a sealingly cutting method of a glass chip tube in accordance with the present invention is applied, and in this Figure, reference numeral 1 represents a glass panel, 2 represents a glass chip tube, 3 represents an exhaust head, 4 represents a heat insulation plate, 5 represents a gas burner and 6 represents a cooling air supply nozzle.

The glass panel 1, which is used as, for example, a flat display panel and a vacuum heat insulation glass panel, is provided with a vent hole 11 which communicates with a cavity, not shown, inside the glass panel 1, and is formed on a corner portion thereof.

The glass chip tube 2, which is placed with its center axis being coincident with the center of the vent hole 11, is sealingly fixed to the glass panel 1 through a frit seal, not shown. Incidentally, a base portion 12 adjacent to the glass panel 1, indicated by cross-hatching in the Figure, represents a portion to be sealingly cut off finally.

The exhaust head 3, which is connected to a vacuum evacuation apparatus, not shown, holds the glass chip tube 2 to which one end thereof is inserted, and carries out a vacuum evacuation from the cavity inside the glass panel 1 through the glass chip tube 2. Meanwhile, when the glass panel 1 is used as a flat display panel, the exhaust head 3 is also connected to the electric discharge gas supply apparatus so that, after the vacuum evacuation, it also supplies electric discharge gas to the cavity through the glass chip tube 2. Furthermore, the exhaust head 3 is preferably supported so as to be movably in a removing direction from the glass panel 1 as indicated by arrow A in the Figure, during fusing and sealingly cutting-off processes of the after-mentioned base portion 12 of the glass chip tube 2.

The heat insulation plate 4 is disposed in such a manner that an air layer 13 isolated from the base portion 12 is formed between the base portion 12 of the glass chip tube 2 and the glass panel 1.

After the vacuum evacuation from the cavity inside the glass panel 1, further in case that it is used as a flat display panel, after sealing the electric discharge gas in the cavity, the gas burner 5 fuses the base portion 12 while at least the vent hole 11, which is an opening of the glass panel 1, is being closed so that the base portion 12 is cut off.

During the sealingly cutting process of the glass chip tube 2 by the gas burner 5, the cooling air supply nozzle 6 delivers cooling air to the air layer 13 so that it becomes possible to prevent heat from the gas burner 5 from transmitting to the glass panel 1.

Meanwhile, when the base portion 12 of the glass chip tube 2 is fused so as to be sealingly cut off, it is preferable to move the exhaust head 3 in such a manner that the exhaust head 3 is removed from the glass panel 1. And, by doing in this manner, the sealingly cutting portion of the glass chip tube 2 is desirably formed into a straight tapered shape toward the tip without causing an undesired shape, such as a bent shape and a largely expanded spherical shape, which results in problems in handling in the succeeding panel processing step.

Furthermore, in the present invention, the heating means is not limited to the gas burner 5, and includes another device such as an electric heater.

Hereinafter, the results of examples are described, in which the sealingly cutting of the glass chip tube 2 is carried out by using the method of the present invention as shown in Fig. 1 and by using other methods.

### (Common conditions)

- Heating means: gas burner
- Sealingly cutting operation time: about 30 seconds
- Glass panel placement state: horizontal
- Glass chip tube placement state: perpendicularly downward
- Base portion position (= Sealingly cutting position): about 15 mm from the glass panel

### (Results)

Temperature of base portion on the glass panel side at the time of completion of sealingly cutting process
- Without the heat insulation plate and cooling air of the present invention: about 210°C
- By the method of the present invention: about 50°C

As shown by the results, the application of the method in accordance with the present invention makes it possible to prevent disturbance in the heating state due to cooling air directly flowing into the heating section of the glass chip tube, and consequently to control the heating state for the sealingly cutting process in a stable manner. The results show that the distance between the base portion and the glass panel portion can be shortened and it is found by the above-mentioned examples that the distance is shortened to at least about 15 mm. Such a difference between the method of the present invention and the other methods becomes particularly remarkable in case in which the glass panel is laterally placed, with the glass chip tube being placed perpendicularly in the downward direction, and convection directed toward the glass panel from the heating portion is not ignorable.

In response to demands for thinner flat display panels and vacuum heat insulation panels, the present invention is suitably applied to the manufacturing processes of these panels.

## Claims

1. A sealingly cutting method of a glass chip tube (2) sealingly fixed to a glass panel (1), and held by an exhaust head (3) for sucking gas in the glass panel (1) through the glass chip tube (2), comprising the steps of:
fusing a base portion (12) of the glass chip tube (2) adjacent to the glass panel (1) by a heating means comprising a gas burner (5) so that the base portion (12) is cut off while at least a portion of the glass chip tube (2) facing to an opening of the glass panel (1) is being closed;
wherein the glass panel (1) is maintained horizontally with the glass chip tube (2) being placed in the perpendicularly downward direction;
wherein a heat insulation plate(4) is provided between the base portion (12) and the glass panel (1) parallel to the glass panel (1) so as to form an air layer (13) isolated from the base portion (12) and cooling air is delivered to the air layer.

2. The sealingly cutting method of a glass chip tube as claimed in claim 1, wherein the base portion (12) of the glass chip tube adjacent to the glass panel is fused by the heating means so that the base portion (12) is cut off while the exhaust head (3) is removed from the glass panel.

## Patentansprüche

1. Dichtungs-Schneidverfahren für ein Glas-Pumpröhrchen (2), das dichtend an einem Glaspanel (1) fixiert ist und durch einen Saugkopf (3) zum Ansaugen von Gas in dem Glaspanel (1) durch das Glas-Pumpröhrchen (2) gehalten wird, mit den Schritten:
Verschmelzen eines Basisteils (12) des Glas-Pumpröhrchens (2) angrenzend an das Glaspanel (1) durch eine Heizeinrichtung, die einen Gasbrenner (5) aufweist, so dass der Basisteil (12) abgeschnitten wird, während zumindest ein Teil des Glas-Pumpröhrchens (2), das zu einer Öffnung des Glaspanels (1) weist, verschlossen wird,
wobei das Glaspanel (1) horizontal gehalten wird, wobei das Glas-Pumpröhrchen (2) in einer rechtwinkelig nach unten weisenden Richtung plaziert ist,
wobei eine Wärme-Isolationsplatte (4) zwischen dem Basisteil (12) und dem Glaspanel (1) parallel zu dem Glaspanel (1) vorgesehen ist, um eine Luftschicht (13) zu bilden, die von dem Basisteil (12) isoliert ist, und wobei Kühlluft an die Luftschicht geliefert wird.

2. Dichtungs-Schneidverfahren für ein Glas-Pumpröhrchens nach Anspruch 1, wobei der Basisteil (12) des Glas-Pumpröhrchens angrenzend an das Glaspanel durch die Heizeinrichtung geschmolzen wird, so dass der Basisteil (12) abgeschnitten wird, während der Saugkopf (3) von dem Glaspanel entfernt wird.

## Revendications

1. Procédé de coupe scellante d'un tube retirable en verre (2) fixé par scellage à un panneau de verre (1) et maintenu par une tête d'évacuation (3) destinée à aspirer un gaz dans le panneau de verre (1) à travers le tube retirable en verre (2), lequel comprend les étapes suivantes :
- assembler par fusion une partie de base (12) du tube retirable en verre (2) voisine du panneau de verre (1) grâce à un moyen de chauffage comprenant un brûleur à gaz (5) de sorte que la partie de base (12) est coupée tandis qu'est fermée au moins une partie du tube retirable en verre (2) qui fait face à une ouverture du panneau de verre (1) ;
- le panneau de verre (1) étant maintenu à l'horizontale, le tube retirable en verre (2) étant alors disposé perpendiculairement vers le bas ;
- une plaque calorifuge (4) étant prévue entre la partie de base (12) et le panneau de verre (1) parallèlement au panneau de verre (1) de manière à former une couche d'air (13) isolée de la partie de base (12), et de l'air de refroidissement étant fourni à la couche d'air.

2. Procédé de coupe scellante d'un tube retirable en verre selon la revendication 1, d'après lequel la partie de base (12) du tube retirable en verre, voisine du panneau de verre, est assemblée par fusion grâce au moyen de chauffage de telle manière que la partie de base (12) est coupée tandis que la tête d'évacuation (3) est retirée du panneau de verre.
